Europäisches Patentamt

European Patent Office

Office européen des brevets

(19)

(11) Veröffentlichungsnummer: **0 105 563 B2**

(12) # NEUE EUROPÄISCHE PATENTSCHRIFT

(45) Veröffentlichungstag der neuen Patentschrift:
20.03.91 Patentblatt 91/12

(51) Int. Cl.$^5$: **C03B 37/025**

(21) Anmeldenummer: **83201388.2**

(22) Anmeldetag: **29.09.83**

(54) Vorrichtung zum Ziehen einer optischen Faser aus einer festen Vorform, die im wesentlichen aus SiO2 und dotiertem SiO2 besteht.

(30) Priorität: 04.10.82 NL 8203843

(43) Veröffentlichungstag der Anmeldung:
18.04.84 Patentblatt 84/16

(45) Bekanntmachung des Hinweises auf die Patenterteilung:
07.05.86 Patentblatt 86/19

(45) Bekanntmachung des Hinweises auf die Entscheidung über den Einspruch:
20.03.91 Patentblatt 91/12

(84) Benannte Vertragsstaaten:
DE FR GB IT NL

(56) Entgegenhaltungen:
DE-A- 2 731 502
DE-B- 2 653 836
GB-A- 1 523 595
US-A- 2 958 899
US-A- 4 030 901
US-A- 4 174 842

(73) Patentinhaber: N.V. Philips'
Gloeilampenfabrieken
Groenewoudseweg 1
NL-5621 BA Eindhoven (NL)

(72) Erfinder: Van der Giessen, Aart Antonie
p/a INT. OCTROOIBUREAU B.V. Prof.
Holstlaan 6
NL 5656 AA Eindhoven (NL)
Erfinder: Van der Hulst, Victor Arie
p/a INT. OCTROOIBUREAU B.V. Prof.
Holstlaan 6
NL 5656 AA Eindhoven (NL)
Erfinder: Janssen, Petrus Johannes
p/a INT. OCTROOIBUREAU B.V. Prof.
Holstlaan 6
NL 5656 AA Eindhoven (NL)

(74) Vertreter: Pennings, Johannes et al
Internationaal Octrooibureau B.V. Prof.
Holstlaan 6
NL-5656 AA Eindhoven (NL)

EP 0 105 563 B2

Jouve, 18, rue Saint-Denis, 75001 PARIS

## Beschreibung

Die Erfindung bezieht sich auf eine Vorrichtung zum Ziehen einer optischen Faser aus einer festen Vorform, die im wesentlichen aus $SiO_2$ und dotiertem $SiO_2$ besteht. welche Vorrichtung einen zylinderförmigen Ofen enthält in dem das kegelförmige Ende der Vorform auf eine Temperatur über 2000°C erhitzt werden kann und ein Rohr, durch das die Faser nach dem Verlassen des Ofens hindurchgeführt wird und dass gegenüber der gezogenen Faser stromabwärts von dem zylinderförmigen Ofen liegt, wobei diese Vorrichtung mit Mitteln versehen ist um ein Gas durch den zylinderförmigen Ofen und das Rohr hindurchzuführen. Eine solche Vorrichtung ist aus des US-A-4030901 bekannt.

Die Faser wird daraufhin durch eine Vorrichtung hindurchgeführt, worin eine dünne Schicht eines Kunststoffes auf die Faser aufgebracht wird und daraufhin durch einen Ofen, in dem ein gegebenenfalls vorhandenes Lösungsmittel aus dem Kunststoff entfernt und/oder die Kunststoffschicht polymerisiert wird.

Es hat sich herausgestellt dass bei Erhöhung der Zuggeschwindigkeit die Dämpfung einer optischen Faser und die Bandbreite zunehmen können.

Vermutet wird ; dass die Erhöhung der Dämpfung die Folge zusatzlicher Spannungen ist ; die in einer Faser vorhanden sind und die durch Volumenrelaxierung und Strukturorientierung verursacht werden. Diese Spannungen treten insbesondere auf, wenn der beim Abkühlen der Faser durchlaufene Temperaturgradient in dem Temperaturbereich von 1200 bis 1800°C besonders gross ist (grösser als 500°C/sek.)

Aus der DE-A-2731502 ist eine Vorrichtung zum Ziehen einer optischen Faser aus einer festen Vorform bekannt, in der die Faser direkt hinter der Kegelzone durch Gase umgeben wird die aus dem Ofen kommen. Die Vorrichtung weist jedoch kein Rohr auf, durch das die Faser nach dem Verlassen des Ofens hindurchgeführt wird und das gegenüber der gezogenen Faser Stromabwärts von dem Ofen liegt.

Die Erfindung hat nun zur Aufgabe eine Vorrichtung zum Durchführen eines Verfahrens zum Ziehen optischer Fasern zu schaffen, womit das Auftreten von Spannungen in der Faser auf eine derartige Weise beschränkt werden kann ; dass bei Vergrösserung der Zuggeschwindigkeit die Dämpfung in der Faser nicht auf unakzeptierbare Weise zunimmt Diese Aufgabe wird nach der Erdindung erfüllt mit einer Vorrichtung der eingangs genannten Art, die das Kennzeichen aufweist, dass diese Mitteln so angebracht sind, dass das Gas durch den zylinderförmigen Ofen in das Rohr strömt und wobei die Länge und der Querschnitt des Rohrs nach der Zuggeschwindigkeit und dem Abkühlungseffekt der betreffenden Gasströmung durch das Rohr derart bemessen sind, dass beim Ziehen der Faser der Temperaturabfall über den Faserquerschnitt senkrecht zu der Zugrichtung und in der Zugrichtung der Faser kleiner ist als ein Temperaturabfall, bei dem die ontische Dämpfung vergrössernde Glasspannungen auftreten würden, wobei um das dem Ofen zugewandte Ende des Rohrs ein zylinderförmiger körper vorgesehen ist an der ein Gaszuführleitung gekoppelt ist, so dass ebenfalls durch den Zwischenraum zwischen diesem Körper und dem Rohr Gas nach oben in den Zugofen und dann in das Rohr geführt werden kann. Dies kann bei spielsweise in der Praxis dadurch verwirklicht werden, dass man eine laminare Gasströmung mit einer Temperatur, die nicht stark von der Fasertemperatur abweicht, mit einer Geschwindigkeit an der Oberfläche der Faser entsprechend der oder nur wenig abweichend von der Fasergeschwindigkeit an der Faser entlang führt. Unter Umständen wird jedoch auch eine turbulente Gasströmung verwendet werden können, insofern das Gas eine homogene Temperatur hat. Vorzugsweise weicht die Temperatur des Gases, das die Faseroberfläche berührt, um weniger als 200 °C von der Fasertemperatur ab.

Die Länge und der Querschnitt des Raumes, durch den die Faser hindurchgeführt wird – welcher Raum in einer praktischen Ausführungsform aus einem Quarzrohr bestehen kann – ist von der Zuggeschwindigkeit und dem Abkühlungseffekt der betreffenden Gasstromung durch diesen Raum abhangig. Es hat sich herausgestellt, dass der beabsichtigte Effekt bereits erreicht wird, wenn die Faser durch einen Raum hindurchgeführt wird, dessen Länge, abhängig von der Zuggeschwindigkeit, derart gewählt ist, dass die Aufenthaltszeit der Faser in dem Raum mindestens 0.1 Sek. betragt und in diesem Raum ein ruhiger laminarer Gasstrom gewährleistet ist.

Dies bedeutet beispielsweise in der Praxis, dass bei einer Zuggeschwindigkeit von etwa 60 m/min. die Länge des Raumes 10 cm minimal beträgt und bei einer Zuggeschwindigkeit von 300 m/min. minimal 50 cm.

Das Gas, das durch den Raum hindurchgeführt wird, kann beispielweise aus Stickstoff, Argon oder Sauerstoff bestehen und zwar abhängig von dem Ofenmaterial, d.h. das Ofenmaterial darf von dem Gas bei der Ofentemperatur während des Ziehvorganges nicht angegriffen werden. In dam Idealfall wird die Gasströmung in dem Raum, durch den die Faser hindurchgeführt wird, im wesentlichen bestimmt durch die Geschwindigkeit, mit der die Faser durch den Raum hindurchgeführt wird.

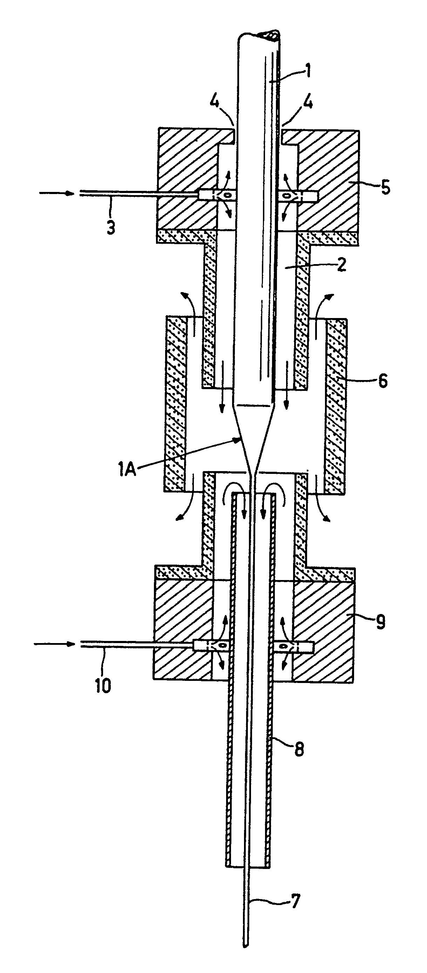

Ein Ausführungsbeispiel der Erfindung ist in der Zeichnung dargestellt und wird im folgenden näher beschrieben.

Eine Vorform 1 aus $SiO_2$ und ein Kern aus dotiertem $SiO_2$, beispielsweise aus $GeO_2$-dotiertem $SiO_2$, wird durch einen ersten zylinderförmigen Raum 2 hindurchgeführt, in den über das Eingangsrohr 3 ein Gas eingeführt wird. Der Gasstrom kann nach oben sowie nach unten entweichen aber die Flansche 4 des den Raum 2 umgebenden rohrförmigen Körpers 5 sorgen dafür, dass das Gas im wesentlichen nach unten wegströmt. Mit der Vorform 1 erreicht der Gasstrom den eigentlichen Zugofen, der aus einem zylinderförmigen Körper 6 aus leitendem Material, beispielweise Graphit, das durch elektrische Stromdurchfuhr erhitzt wird (in der Zeichnung nicht näher dargestellt) besteht. In dem Ofen wird die Vorform auf 2100°C erhitzt, während das Gas durch Wärmeleitung ebenfalls eine hohe Temperatur erhält. Durch die Leitung 10 auf der Umterseite des zylinderförmigen Körpers 9 wird ebenfalls Gas nach oben in den Zugofen 6 geführt, wobei es bei der in der Figur dargestellten Ausführungsform einen Leckstrom nach unten gibt. Das Gas mit der Faser 7 durchläuft daraufhin nach der Kegelzone 1A das Quarzrohr 8, wobei die Stromgeschwindigkeit derart geregelt wird, dass das Gas in dem Rohr 8 ein laminares Strömungsprofil aufweist. Bei einer Ziehgeschwindigkeit von 1 m/sel. betrug die Fasertemperatur am Ausgang des Quarzrohres 8 : 1650°C.

In einer praktischen Ausführungsform bestand das durch die Leitung 3 und 10 eingeblasene Gas aus Argon.

Mit der beschriebenen Ausführungsform der Vorrichtung wird in einem bestimmten Fall eine Verringerung der Dämpfung um etwa 16% erzielt.

## Ansprüche

1. Vorrichtung zum Ziehen einer optischen Faser aus einer festen Vorform, die im wesentlichen aus $SiO_2$ und dotiertem $SiO_2$ besteht, welche Vorrichtung einen zylinderförmigen Ofen enthält in dem das kegelförmige Ende der Vorform auf eine Temperatur über 2000°C erhitzt werden kann und ein Rohr, durch das die Faser nach dem Verlassen des Ofens hindurchgeführt wird und das gegenüber der gezogenen Faser stromabwärts von dem zylinderförmigen Ofen liegt, wobei diese Vorrichtung mit Mitteln versehen ist um ein Gas durch den zylinderförmigen Ofen und das Rohr hindurchzuführen, dadurch gekennzeichnet, dass diese Mitteln so angebracht sind, dass das Gas durch den zylinderförmigen Ofen in das Rohr strömt und wobei die Länge und der Querschnitt des Rohrs nach der Zuggeschwindigkeit und dem Abkühlungseffekt der betreffenden Gasströmung durch das Rohr derart bemessen sind, dass beim Ziehen der Faser der Temperaturabfall über den Faserquerschnitt senkrecht zu der Zugrichtung und in der Zugrichtung der Faser kleiner ist als ein Temperaturabfall, bei dem die optische Dämpfung vergrössernde Glasspannungen auftreten würden, wobei um das dem Ofen zugewandte Ende des Rohrs ein zylinderförmiger Körper vorgesehen ist an der ein Gaszuführleitung gekoppelt ist, so dass ebenfalls durch den Zwischenraum zwischen diesem Körper und dem Rohr Gas nach oben in den Zugofen und dann in das Rohr geführt werden kann.

## Claims

1. A device for drawing an optical fibre from a solid preform consisting essentially of $SiO_2$ and doped $SiO_2$, which device comprises a cylindrical furnace, in which the conical end of the preform can be heated at a temperature above 2000°C, and a tube through which the fibre is led after leaving the furnace and which, with respect to the drawn fibre, is situated downstream of the cylindrical furnace, said device comprising means to lead a gas through the cylindrical furnace and the tube, characterized in that these means are provided so that the gas flows through the cylindrical furnace into the tube, the length and the cross-section of the tube being proportioned in accordance with the drawing rate and the cooling effect of the relevant gas flow through the tube, in such a manner that on drawing the fibre, the temperature drop across the fibre cross-section at right angles to the direction of drawing and in the direction of drawing of the fibre is smaller than a temperature drop at which glass stresses increasing optical attenuation would occur, a cylindrical body being provided around the end of the tube facing the furnace and a gas-supply pipe being connected to said cylindrical body, so that also through the space between said body and the tube gas can be led upwards into the fibre-drawing furnace and then into the tube.

## Revendications

1. Dispositif pour l'étirage d'une fibre optique à partir d'une préforme solide qui est essentiellement constituée par $SiO_2$ et $SiO_2$ dopé, dispositif qui présente un four cylindrique dans lequel l'extrémité conique de la préforme peut être chauffée à une température supérieure à 2000°C et un tube que traverse la fibre après avoir quitté le four et qui est situé en face de la fibre étirée en aval du four cylindrique, ce dispositif étant muni de moyens pour faire circuler un gaz à travers le four cylindrique et le tube, caractérisé en ce que ces moyens sont disposés de façon que le gaz circule à travers le four optique dans le tube et la longueur et la section du tube soient mesurées suivant la vitesse d'étirage et l'effet de refroidissement du courant de gaz en question traversant le tube de telle façon que, lors de l'étirage de la fibre, la chute de température dans la section de fibre perpendiculaire à la direction d'étirage et dans la direction d'étirage de la fibre soit inférieure à une chute de température à laquelle se produisent les tensions de verre augmentant l'amortissement optique, alors qu'autour de l'extrémité du tube située vis-à-vis du four est disposé un corps cylindrique auquel est accouplée une canalisation d'amenée de gaz de façon que du gaz puisse être conduit également à travers l'espace intermédiaire compris entre ce corps et le tube vers le haut dans le tube d'étirage et puis dans le tube.